# EUROPEAN PATENT APPLICATION

(11) **EP 0 910 175 A1**
(43) Date of publication of application: **21.04.1999**
(21) Application number: 97440098.8
(22) Date of filing: 17.10.1997
(51) Int. Cl.: H04B 3/20

(54) **Two-way echo suppressor**

(71) Applicant: ALCATEL, 75008 Paris (FR)
(72) Inventor: De Fermin Y Del Castillo, Rafael, 28012 Madrid (ES); Ramos Font, Monica, 28030 Madrid (ES)
(74) Representative: Kugler, Hermann, Dipl.-Phys.

(57) **Abstract**

Echo suppressor device (DSE) supplied to the subscribers to a communications system, which is connected in the four-wire side of the link and which comprises two signal attenuators (AS1, AS2) which apply the attenuation determined by an attenuation control circuit (CC), two speech detectors (DV1, DV2) that generate voice signals (SV1, SV2) with which the attenuation control circuit (CC) defines the states of the communication through which the subscriber conversation is passing; the attenuation applied being a function of the voice signals (SV1, SV2), of the present state of the communication and of the previous state of the communication.

The attenuation control circuit (CC) is constantly receiving and retaining the changes in level of the voice signals (SV1, SV2) produced by each of the speech detectors (DV1, DV2).

## Description

### OBJECT OF THE INVENTION

This invention refers to a suppressor device for acoustic echo produced in telephone communications systems, this phenomenon being associated with the increment in the delays introduced by the communications systems. The echo effect can degrade the quality of a telephone conversation established between two subscribers to the communications system.

The echo suppressor device is of particular application in systems with inherent delay, such as point-to-multipoint communications systems working at microwave frequencies and employing time division multiplex access (TDMA) techniques.

### BACKGROUND OF THE INVENTION

The speech information generated in the telephone terminal of a subscriber to a communications system is transmitted to the public telephone network over a path in which is inserted a two-to-four wire conversion circuit, the two-wire output of which is connected to the subscriber pair and the four-wire output to the public telephone network.

In the two-to-four wire conversion circuit, an echo can be produced in either direction that degrades the quality of the telephone communication set up between two subscribers to the communications system; consequently it is necessary to employ devices to cancel or suppress the echo.

Such devices are already known, for example, by the European patent application EP 0112523, in which details are given of an echo suppressor circuit. This echo suppressor circuit includes an echo suppressor for each transmission path, a decision logic to open or close the attenuation switches and a measuring circuit.

The echo suppresor circuit shown in this patent application treats the echo problems of each subscriber to the communications system separately since it inserts in each echo path a unidirectional suppressor which includes modules to detect the presence of speech in both directions, as well as voice attenuators also for both echo paths; as a result there is redundancy in the electronic circuitry.

The object of this invention is to provide an echo suppressor device that deals with jointly the echo problem of the two subscribers who have established telephone communication and thereby eliminate duplication of electronic circuits.

### CHARACTERISATION OF THE INVENTION

The echo suppressor device of the invention is connected in the four-wire side of the link. It is formed by two signal attenuators and two speech detectors that are governed by an attenuation control circuit which, in turn, sends a signal to a timer that controls the on and off times of the signal attenuators.

The attenuation control circuit is continuously receiving and storing the voice signals coming from each of the speech detectors and, consequently, is constantly aware of the state of the conversation.

The attenuation applied by the control circuit is a function of the voice signals, of the present state of the communication, and of the previous state of the communication.

In this way, the echo problem is dealt with jointly for the two subscribers who have established telephone communication and, consequently, the number of electronic components is reduced and circuit duplication avoided.

### BRIEF FOOTNOTES TO THE FIGURES

A fuller explanation of the invention is given in the description which follows based on the figures attached, in which:
- figure 1 shows schematically where an echo suppressor device according to the invention is connected,
- figure 2 shows a block diagram of the echo suppressor device according to the invention, and
- figure 3 shows the states and possible transitions between states, in the echo suppressor device.

### DESCRIPTION OF THE INVENTION

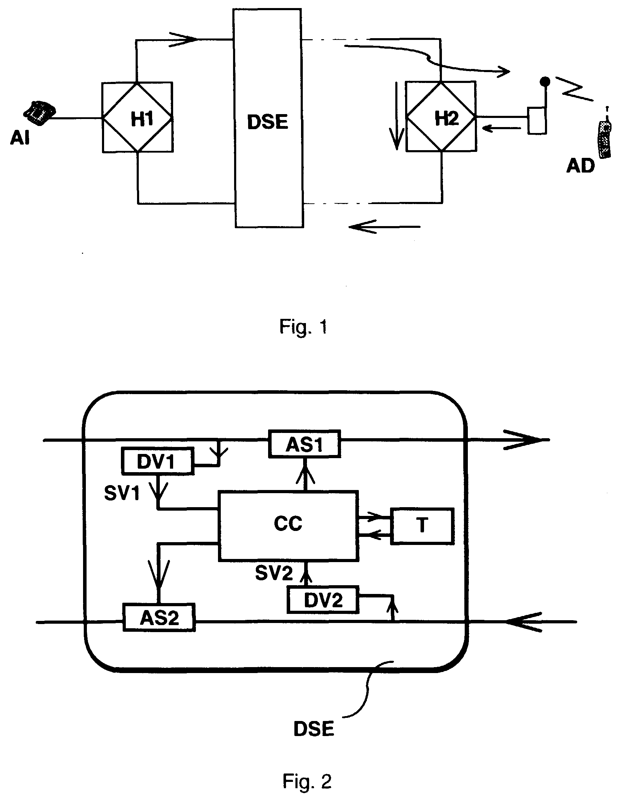

The echo suppressor device DSE of the invention is connected in the four-wire side of the link and, consequently, between the two-wire conversion circuits, known as hybrid coils H1 and H2, or simply hybrids; see figure 1.

This hybrid performs the separation of the transmit and receive signals onto two unidirectional pairs for the subscriber to the public telephone network direction, while in the other direction, from the public telephone network to the subscriber, the signals are transmitted over a single bidirectional pair.

Consequently it may be said that each subscriber is connected to one side of the echo suppressor device, and therefore there is one subscriber located on the right of the echo suppressor device DSE, and the other on the left.

Figure 2 shows schematically the echo suppressor device DSE which includes an attenuation control circuit CC which determines the attenuation that will be applied by the two signal attenuators AS1 and AS2 to the signals, speech information, that are transmitted in both directions on the four-wire part of the public telephone network between the telephone terminals of two subscribers that have established communication.

It also includes two speech detectors DV1 and DV2 which detect the presence of signals being transmitted between the telephone terminals of two subscribers and generate voice signals that are sent to the attenuation control circuit CC. This attenuation control circuit CC enables and inhibits a timer T which controls the on and off times of the signal attenuators AS1 and AS2 for attenuating echo tails.

The signal attenuators AS1 and AS2 continuously apply the attenuation that the attenuation control circuit CC determines as a function of the voice signals SV1 and SV2, of the present state of the communication and of the previous state of the communication. Consequently the control circuit stores the different states through which the communication passes.

The voice signals SV1 and SV2 can take two levels, one when a signal is being transmitted, representing speech information, and the other when there is no transmitted signal, representing a period of silence.

Allowing for the two levels that the voice signals SV1 and SV2 can take, the following states can be defined in a conversation between two subscribers:
- speech-speech (VV), the two subscribers are talking at the same time,
- silence-silence (SS), the two subscribers are silent at the same time,
- speech-silence (VS), the subscriber on the left is talking and the one on the right is silent, and
- silence-speech (SV), the subscriber on the left is silent and the one on the right is talking.

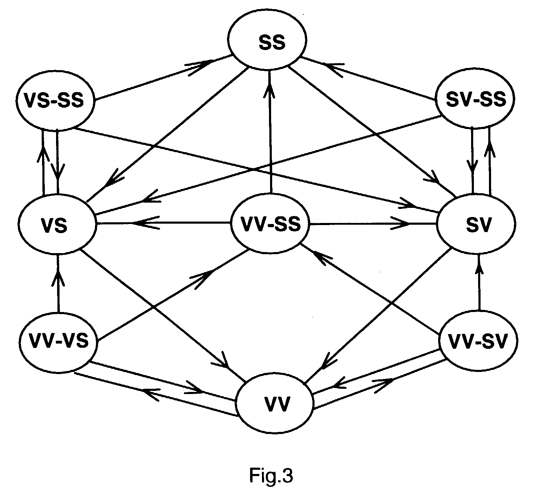

To pass from one state to another, when the end state of one of the subscribers is silent, other states, termed intermediate, are used; see figure 3. These states are made up of two parts, the first indicating the originating state and the second indicating to what state the conversation between the two subscribers will evolve. The intermediate states are:
- speech speech-silence silence (VV-SS), the two subscribers were talking at the same time and both change to not talking at the same time,
- silence speech-silence silence (SV-SS), the subscriber on the right was talking and passes to not talking, while the subscriber on the left remains silent,
- speech speech-speech silence (VV-VS), both subscribers were talking and the one on the left continues to talk while the one on the right falls silent,
- speech silence-silence silence (VS-SS), the subscriber on the left was talking and passes to not talking, while the subscriber on the right remains silent, and
- speech speech-silence speech (VV-SV), the subscriber on the left was talking and falls silent, while the one on the right continues to talk without stopping.

The echo effect occurs whenever a communication is established between two subscribers and arises in the following manner: the telephone set of the subscriber on the right AD, for example, detects a first signal coming from the telephone set of the subscriber on the left Al.

The signal coming from the telephone terminal of the subscriber on the left Al is applied to a four-to-two wire conversion circuit H2 where it undergoes a certain attenuation. The telephone terminal of the subscriber on the right AD transmits a signal which is basically its own signal produced in its microphone to which is added the returning echo of the first signal produced in the four-to-two wire conversion circuit H2 (see figure 1), which is present in the telephone terminal for separating the signals, one going to the earpiece and the other coming from the microphone of said terminal.

The signal coming from the telephone terminal of the subscriber on the right AD is applied to the two-to-four wire conversion circuit H2 and, after undergoing the corresponding attenuation, is applied to the transmission path on which there is a compound signal consisting of the signal coming from the telephone terminal plus an echo signal produced in the two-to-four wire conversion circuit H2 of the terminal of the subscriber on the right AD.

If the subscriber on the right AD does not speak, the only signal being sent over the transmit path is that of the echo being produced in the two-to-four wire conversion circuit H2 of the terminal of the subscriber on the right.

In the situation described, the speech detector DV1 generates a first voice signal SV1 with speech level, and the speech detector DV2 generates a second speech signal SV2 with silence level, and consequently the state is speech-silence (VS), and the attenuation control circuit CC with the signals SV1 and SV2 and the present state of the communication, immediately activates the attenuator AS2, so that the subscriber on the left Al does not hear his own echo, and inhibits the attenuator AS1.

The communication between the subscribers progresses to other states, such that if the speech detector DV2 detects speech information, it generates and sends a voice signal SV2 to the attenuation control circuit CC which, taking into account the previous state, speech-silence (VS), and the new state speech-speech (VV), inhibits the attenuator AS2 which was activated, so that the speech information reaches the subscriber on the left Al.

If one of the two subscribers stops speaking, for example the subscriber on the left Al, the speech detector DV1 detects the absence of speech information in the transmit path and, as a result, the new state is speech speech-silence speech (VV-SV). The attenuation control circuit CC, taking into account that the previous state was speech-speech (VV), initialises the timer T in order to activate the attenuator AS2 which will attenuate the echo tail of this subscriber Al when it is turned towards the subscriber on the left. This happens if the speech signal SV1 continues with the silence level, and the final state will be silence-speech (SV).

Nevertheless, if the signal SV1 does not remain at the silence level, the attenuation control circuit CC does not activate the signal attenuator AS2, since it is considered that the subscriber Al has left a greater space than normal between words and, consequently, the new state becomes speech-speech (VV) again, and the timer T is also inhibited.

If in the speech speech-silence speech state the speech detector DV2 detects a silence level in the signal SV2, the attenuation control circuit CC activates the two signal attenuators AS1, AS2 and the timer T, and the state becomes speech speech-silence silence (VV-SS). The timer T inhibits the two signal attenuators AS1, AS2 once the echo tails have been attenuated, at which point the state reached is silence-silence (SS).

The table below summarises the transitions from one state to another (symmetric transitions are not included):

| ORIGINAL STATE | FINAL STATE | CHANGE | FINAL STATE SITUATION |
|---|---|---|---|
| SS | SV | SUBSCRIBER ON THE RIGHT SPEAKING | ATTENUATOR AS1 ON |
| | | | ATTENUATOR AS2 OFF |
| | | | TIMER T OFF |
| SV | VV | SUBSCRIBER ON THE LEFT SPEAKING | ATTENUATOR AS1 OFF |
| | | | ATTENUATOR AS2 OFF |
| | | | TIMER T OFF |
| SV | SV-SS | SUBSCRIBER ON THE RIGHT STOPS | ATTENUATOR AS1 ON |
| | | | ATTENUATOR AS2 OFF |
| | | | TIMER T ON |
| SV-SS | SS | SUBSCRIBER ON THE RIGHT SILENT | ATTENUATOR AS1 OFF |
| | | | ATTENUATOR AS2 OFF |
| | | | TIMER T OFF |
| SV-SS | SV | SUBSCRIBER ON THE RIGHT SPEAKING | ATTENUATOR AS1 ON |
| | | | ATTENUATOR AS2 OFF |
| | | | TIMER T OFF |
| SV-SS | VS | SUBSCRIBER ON THE LEFT SPEAKING | ATTENUATOR AS1 OFF |
| | | | ATTENUATOR AS2 ON |
| | | | TIMER T OFF |
| VV | VV-SV | SUBSCRIBER ON THE LEFT STOPS | ATTENUATOR AS1 OFF |
| | | | ATTENUATOR AS2 OFF |
| | | | TIMER T ON |
| VV-SV | SV | SUBSCRIBER ON THE LEFT SILENT | ATTENUATOR AS1 ON |
| | | | ATTENUATOR AS2 OFF |
| | | | TIMER T OFF |
| VV-SV | VV | SUBSCRIBER ON THE LEFT SPEAKING | ATTENUATOR AS1 OFF |
| | | | ATTENUATOR AS2 OFF |
| | | | TIMER T OFF |
| VV-SV | VV-SS | SUBSCRIBER ON THE RIGHT STOPS | ATTENUATOR AS1 OFF |
| | | | ATTENUATOR AS2 ON |
| | | | TIMER T ON |
| VV-SS | SV | SUBSCRIBER ON THE RIGHT SPEAKING | ATTENUATOR AS1 ON |
| | | | ATTENUATOR AS2 OFF |
| | | | TIMER T OFF |
| VV-SS | SS | SUBSCRIBER ON THE RIGHT SILENT | ATTENUATOR AS1 OFF |
| | | | ATTENUATOR AS2 OFF |
| | | | TIMER T OFF |

## Claims

1. **ECHO SUPPRESSOR DEVICE** which receives the signals of subscribers to a communications system when they are holding a telephone conversation which is connected on the four-wire side of the link and before the two-to-four wire conversion circuit, **characterised** in that it comprises two signal attenuators (AS1, AS2) which apply the attenuation determined by an attenuation control circuit (CC), two speech detectors (DV1, DV2) which generate voice signals (SV1, SV2) with which the attenuation control circuit (CC) defines the states of the communication through which the conversation between the subscribers is passing, such that the attenuation applied is a function of the voice signals (SV1, SV2), of the present state of the communication and of the previous state of the communication.

2. **ECHO SUPPRESSOR DEVICE** according to claim 1, **characterised** in that the attenuation control circuit (CC) is continuously receiving and storing the changes in level of the voice signals (SV1, SV2) coming from each of the speech detectors (DV1, DV2).

3. **ECHO SUPPRESSOR DEVICE** according to claim 2, **characterised** in that it also comprises a timer (T) to control the on and off times of the signal attenuators (AS1, AS2).
